Europäisches Patentamt

European Patent Office

Office européen des brevets

(11) Veröffentlichungsnummer: **0 265 547**
A1

## (12) EUROPÄISCHE PATENTANMELDUNG

(21) Anmeldenummer: 86115091.0

(22) Anmeldetag: 30.10.86

(51) Int. Cl.⁴: **C22B 59/00** , C22B 60/02 , C01F 17/00

(43) Veröffentlichungstag der Anmeldung:
04.05.88 Patentblatt 88/18

(84) Benannte Vertragsstaaten:
**DE FR GB**

(71) Anmelder: **URAPHOS CHEMIE GmbH**
**Ollenhauerstrasse 100**
**D-1000 Berlin 51(DE)**

(72) Erfinder: **Brodt, Elfi**
**Pfahlgrabenstrasse 50**
**D-6270 Idstein-Eschenbach(DE)**
Erfinder: **Brodt, Peter**
**Pfahlgrabenstrasse 50**
**D-6270 Idstein-Eschenbach(DE)**
Erfinder: **Ballhorn, Reinhard, Dr.**
**Carl-Legien-Strasse 2**
**D-6102 Pfungstadt(DE)**

(74) Vertreter: **Weinhold, Peter, Dr. et al**
**Patentanwälte Dipl.-Ing. G. Dannenberg Dr.**
**P. Weinhold Dr. D. Gudel Dipl.-Ing. S.**
**Schubert Dr. P. Barz Siegfriedstrasse 8**
**D-8000 München 40(DE)**

(54) **Verfahren zur Gewinnung von Seltenen Erden und gegebenenfalls Uran und Thorium aus Schwermineralphosphaten.**

(57) Die vorliegende Erfindung betrifft ein Verfahren zur Gewinnung von Seltenen Erden und gegebenenfalls Uran und Thorium aus entsprechenden Schwermineralphosphaten durch Aufschluß der zerkleinerten Schwermineralphosphate mittels Mineralsäuren unter erhöhtem Druck und erhöhter Temperatur, Abtrennung der anwesenden Feststoffe von der flüssigen Phase, gegebenenfalls Mesothoriumentfernung, Abtrennung von Uran und Thorium und gegebenenfalls Auftrennung der Seltenen Erden, bei dem man vor dem Aufschluß der Schwermineralphosphate zu diesen das Salz, Oxid oder Metall eines Kations zusetzt, welches ein im Aufschlußmedium schwer lösliches Metallphosphat bildet.

EP 0 265 547 A1

# VERFAHREN ZUR GEWINNUNG VON SELTENEN ERDEN UND GEGEBENENFALLS URAN UND THORIUM AUS SCHWERMINERALPHOSPHATEN

Die Erfindung betrifft ein neues Verfahren zur Gewinnung von Seltenen Erden und gegebenenfalls Uran und Thorium aus entsprechenden Schwermineralphosphaten durch Aufschluß der zerkleinerten Schwermineralphosphate mittels Mineralsäuren unter erhöhtem Druck und erhöhter Temperatur, Abtrennung der anwesenden Feststoffe von der flüssigen Phase, gegebenenfalls Mesothoriumentfernung, Abtrennung von Uran und Thorium und gegebenenfalls Auftrennung der Seltenen Erden.

Aus der US-P 2 783 125 ist bekannt, eine alkalische Drucklaugung bzw. alkalische Laugung von Monazit unter Normaldruck durchzuführen.

Dieses Verfahren hat einige gravierende Nachteile, von denen die folgenden genannt werden sollen:

a) Es besteht ein hoher Chemikalienverbrauch der dadurch bedingt ist, daß nach alkalischem Aufschluß der Hydroxidrückstand entweder in verdünnter Salpetersäure bzw. Salzsäure in Lösung gebracht werden muß. Dabei entstehen Neutralisationsverluste durch Wechsel vom alkalischen in das saure Milieu.

b) Parallel zur Gewinnung der SEE-Elemente (Seltenen Erden) muß eine TSP-(Trinatriumphosphat) Produktion aufrechterhalten werden. Der Markt für TSP ist jedoch sehr begrenzt.

c) Die völlige Abtrennung und eine eventuelle Gewinnung von Uran und Thorium ist bei dem alkalischen Verfahren aufwendig, wirtschaftlich nicht attraktiv und wird deshalb in der Regel nicht durchgeführt.

d) Die Filtration der schwerlöslichen Hydroxide und der ausgefällten Kieselsäure ist aufwendig und kostspielig.

Bevor sich der alkalische Aufschluß in der industriellen Praxis durchgesetzt hatte, wurden derartige Schwermineralphosphate mit Schwefelsäure aufgeschlossen. Die Nachteile dieses Verfahrens haben dazu geführt, daß es heute nur noch von historischem Interesse ist. Die Verwendung anderer Mineralsäuren, wie $HNO_3$ und HCl, als Laugelösung für natürliche SEE-Phosphate wurde von der Fachwelt als nicht möglich bezeichnet (USAEC Report BMI-JDS-135, Batelle Memorial Inst., 1948).

Zu erwähnen ist noch ein Aufschlußverfahren, das - analog der Rohphosphorgewinnung aus Phosphaterz - bei Temperaturen von 1400°C - 1700°C in Gegenwart von Kohle und Quarz durchgeführt wird. Dieses Verfahren ist offenbar im Vergleich zum alkalischen Aufschluß kostenungünstig und hat keinen Eingang in die industrielle Produktion gefunden.

Perchlorsäure ($HClO_4$) wurde ebenfalls als Aufschlußmittel eingesetzt. Es wurde festgestellt, daß damit Monazit zwar aufzuschließen ist, aber die Kosten, verursacht durch die zum Aufschluß nötigen großen $HClO_4$-Mengen, dieses Verfahren unrentabel machen.

Aufgabe der Erfindung ist die Schaffung eines Verfahrens zur Gewinnung von Seltenen Erden, aber auch gegebenenfalls Uran und Thorium aus Schwermineralphosphaten, das besonders gut zum Aufschluß von Xenotim-Konzentraten und von durch Eisen verunreinigten Monazit-Konzentraten geeignet ist. Mit diesem Verfahren soll es möglich sein, in kurzen Reaktionszeiten mit relativ geringen Mengen an Aufschlußlösungen, Waschwässern und dergleichen auszukommen, wobei Filtrationsprobleme praktisch vermieden werden Das erfindungsgemäße Verfahren soll zu hohen Ausbeuten der gewünschten Produkte führen, und einen einfachen, aber auch flexiblen Verfahrensgang ermöglichen, wobei in der Praxis die Notwendigkeit der Kopplung mit der Gewinnung von Trinatriumphosphat nicht bestehen, aber eine derartige TSP-Produktion möglich sein soll.

Gegenstand der Erfindung ist ein Verfahren zur Gewinnung von Seltenen Erden und gegebenenfalls, Uran und Thorium aus entsprechenden Schwermineralphosphaten durch Aufschluß der zerkleinerten Schwermineralphosphate mittels Mineralsäuren unter erhöhtem Druck und erhöhter Temperatur, Abtrennung der anwesenden Feststoffe von der flüssigen Phase, gegebenenfalls Mesothoriumentfernung, Abtrennung von Uran und Thorium und gegebenenfalls Auftrennung der Seltenen Erden, das dadurch gekennzeichnet ist, daß man vor dem Aufschluß der Schwermineralphosphate zu diesen das Salz, Oxid oder Metall eines Kations zusetzt, welches ein im Aufschlußmedium schwer lösliches Metallphosphat bildet.

Das erfindungsgemäße Verfahren wird im folgenden zwar anhand einer speziellen Ausführungsform, nämlich des Aufschlusses von Monazit beschrieben, jedoch gelten die dabei geschilderten allgemeinen Verfahrensbedingungen und apparativen Erläuterungen für den Aufschluß von anderen Schwermineralphosphaten entsprechend.Modifizierungen des Verfahrens zur optimalen Ausgestaltung für den jeweils vorliegenden Einzelfall sind ohne weitere erfinderische Tätigkeit leicht möglich. Zur näheren Erläuterung ist ferner in beiliegender Figur ein Fließschema dargestellt, aus dem die Folge der einzelnen Verfahrensschritte ersichtlich ist.

Bei dem erfindungsgemäßen Verfahren wird also zur Laugung des entsprechenden Mineralkonzentrates Salpetersäure verwendet. Zuerst wird das Konzentrat zerkleinert und äußerst fein aufgemahlen (beispielsweise <400 mesh). Als Mühlen können sowohl Planetenmühlen, Schwingmühlen oder Drehkammerschwingmühlen verwendet werden. Durch starke mechanische Zerkleinerung ist optisch bei dem Mineral eine Isotropisierung zu beobachten. Nach der Zerkleinerung wird das Mahlgut mit Eisen II-und/oder Eisen III-Salzen, Eisenoxiden und/oder metallischem Eisen versetzt. Wenn auch andere Elemente wie Mangan und/oder Magnesium in Form ihrer Salze, Oxide oder ihrem elementaren Zustand oder Gemische derselben ebenfalls zugesetzt werden können, wird der Zusatz von Eisen in Form von elementarem Eisen oder den entsprechenden Salzen bevorzugt. Das Verhältnis zwischen dem zugegebenen Eisen und/oder Eisenverbindungen und dem im Laugegut befindlichen $P_2O_5$-Anteil liegt zwischen 1 (z.B. 1.5) und 1.75 Mol $Fe_2O_3$/Mol $P_2O_5$.

Eine Umsetzung des Laugegutes läuft dann nach folgenden Reaktionsschemata ab:

(1) $SEE(PO_4) + Fe^{3+} \rightarrow Fe\,PO_4 + SEE^{3+}$

(2) $2SEE(PO_4) + 3\,Fe^{2+} \rightarrow Fe_3(PO_4)_2 + 2SEE^{3+}$

Laugegut und Säure werden dazu in ein Druckgefäß gefüllt, das auf 170°C - 190°C aufgeheizt wird. Die Suspension hat ein Feststoff-Flüssigkeitsverhältnis von 1:3.25. Die bevorzugte Lösungstemperatur liegt bei 180°C. Nach Erreichen der Endtemperatur beträgt die Reaktionszeit zwischen 20 und 40 Minuten. Die besten Ergebnisse werden bereits nach 20 - 30 Minuten erzielt. Die Suspension steht unter dem bei der jeweiligen Temperatur anstehenden Eigendruck der Lösung, in der Regel stellt sich ein Druck von 7 - 9 bar ein. Nach einer halbstündigen Reaktionszeit wird das Druckgefäß abgekühlt und der Feststoff von der salpetersauren Lösung, die die SEE-Elemente, Uran und Thorium enthält, durch Filtration abgetrennt. Aus der klaren salpetersauren Lösung wird nun unter Einsatz von TBP (Tributylphosphat) durch Flüssig-Flüssigextraktion problemlos Uran und Thorium gewonnen und als verkaufsfähiges ADU (Ammoniumdiuranat) und Thoriumoxalat dargestellt (G. Koch, Chemiker-Zeitung, 95, Nr. 6 (1971)).Sowohl die U/Th-Extraktion aus $HNO_3$-Lösungen als auch deren extraktive Auftrennung, Rückgewinnung und Darstellung als reine Fällprodukte sind bekannt.

Nach der Uran-und Thoriumabtrennung bzw. -gewinnung werden die Zerfallsprodukte der Uran-und Thoriumreihe mittels Kollektorfällung von $BaSO_4$ und Zugabe von $Na_2S$ abgetrennt. Die Fällung erfolgt vorzugsweise in der Hitze. Der Feststoff wird durch eine zweite Filtration von der Lösung getrennt. Diese mittels Bariumsulfat und Natriumsulfid durchgeführte Kollektorfällung kann als Stand der Technik bezeichnet werden und bedarf somit keiner näheren Erläuterung.

Die so gewonnene Uran-,Thorium-und spaltproduktfreie Seltenerdlösung kann nun einer weiteren Aufbereitung zur Reindarstellung der Seltenen Erden unterworfen werden. Diese Verfahren sind ebenfalls bekannt.

Prinzipiell können zur Auftrennung der Seltenen Erden in die einzelnen Elemente folgende Methoden angewandt werden:

-Fraktionierte Fällung entweder als Oxalate, Doppelsulfate etc.

-Solventextraktion

-Ionenaustauscherprozesse.

Heute wird überwiegend mit der Solventextraktion und dem Ionenaustausch gearbeitet. Das bevorzugte Medium für diese Auftrennverfahren sind salzsaure oder salpetersaure Lösungen der SEE-Elemente. Die Lösung aus der genannten zweiten Filtration kann also vorteilhaft einer Solventextraktion zugeführt werden.

Bei dem zuvor beschriebenen Verfahrensgang bildet sich völlig überraschend ein Feststoff - ein Eisenphosphat, etwa der Zusammensetzung $Fe_5(PO_4)_3(OH)_5$. Da das Phosphation aus dem Reaktionsgleichgewicht in Form eines schwerlöslichen Eisenphosphatsalzes entfernt wird, läßt sich durch gezielte Eisenzugabe zu dem Laugegut der Lösevorgang und damit das Ausbringen der See-Elemente steuern. Dadurch kann eine Ausbeute der SEE-Elemente von >96 % sowohl der Ceriterden als auch der Yttererden erreicht werden. Gleichzeitig bedeutet dies, daß die SEE-führende, salpetersaure Lösung nur einen sehr geringen Restgehalt an $P_2O_5$ hat ( <100 ppm).

Bei Anwendung von Salpetersäure als Laugelösung gehen keine nennenswerten Mengen an $SiO_2$ in Lösung, die einen nachfolgenden SE-Extraktionsprozeß stören könnten.

Der Einsatz von verschiedenen Werkstoffen als Baumaterial für den Drucklaugebehälter (Autoklav) wurde in Korrosionsversuchen (Laufzeit >8 Wochen) untersucht. Als geeignete Materialien für die Auskleidung von Autoklaven bei o.g. Reaktionsführung haben sich z.B. Teflon, Titan und Zirkon erwiesen. Die technischen Vorteile des erfindungsgemäßen Verfahrens lassen sich wie folgt beschreiben:

-Durch die kurze Reaktionszeit von etwa 0.5 h ergeben sich kleine Baueinheiten.

-Die durchgesetzten Mengen an Lösungen, Waschwässern etc. sind wesentlich geringer als bei dem derzeitigen alkalischen Aufschlußverfahren.

3

-Eine Produktion von TSP ist nicht mit der Gewinnung der SEE-Elemente sowie von Uran und Thorium gekoppelt. Aus dem Eisenphosphatrückstand kann jedoch nach folgender Reaktion auch TSP gewonnen werden:

(3) $FePO_4 + 3NaOH \rightarrow Na_3PO_4 + Fe(OH)_3$

-Das hier anfallende Eisenhydroxid kann dem nächsten Aufschluß als Eisenrohstoff zugeschlagen werden. Es ergibt sich somit ein sehr flexibler und einfacher Verfahrensgang, der je nach Bedarf auch eine TSP-Produktion erlaubt.

-Die Ausbeute an leichten und schweren SEE-Elementen ist mit >96 % gleich hoch. Deshalb ist dieses Verfahren auch besonders geeignet zum Aufschluß von Xenotimkonzentraten und von durch Eisen verunreinigten Monazitkonzentraten.

-$P_2O_5$ in Form von Orthophosphat, ist ein guter Komplexbildner für die SEE-Kationen. Dadurch kommt es bei $P_2O_5$ haltigen Lösungen der SEE, die zur Extraktion eingesetzt werden sollen, zu SEE-Verlusten über die Bildung von SEE-Phosphaten, die im Raffinat verbleiben.

-Bei optimalen Betriebsbedingungen der zuvor geschilderten Reaktion liegt der $P_2O_5$-Gehalt des SEE-Filtrates bei <0.01 % und ein SEE-Verlust durch SEE-Phosphatkomplexbildung während der der Laugung nachfolgenden SEE-Gewinnung mittels Flüssig-Flüssig-Extraktion kann fast völlig unterdrückt werden. Die Phosphatgehalte der Extraktionslösungen aus dem alkalischen Aufschluß können bis zu 1 % $P_2O_5$ erreichen.

-Die Bildung von löslichen Natriumsilikaten bei der alkalischen Monazitlaugung, die bei der Ansäuerung des Hydroxidrückstandes wiederum Kieselsäure bilden, führt zu Filtrationsproblemen, die bei einer salpetersauren Laugung des Monazits nicht auftreten.

Anhand der folgenden Beispiele wird das erfindungsgemäße Aufschlußverfahren noch näher erläutert.

## BEISPIEL 1

In einem mit Teflon ausgekleideten Laborautoklaven mit Rührwerk, Innentemperatursteuerung und Probenahmeventil wurden 65 g einer ca. 40 %igen Salpetersäure vorgelegt. 20 g eines feinst aufgemahlenen Monazitsandes (<400 mesh) wurden in die Lösung eingetragen. Zu der in dem Monazit enthaltenen $PO_4$-Menge wurde eine stöchiometrische Menge Eisen III in Form eines Eisen III-Salzes zur Reaktionslösung zugegeben. Der Autoklav wurde verschlossen und unter Rühren auf 180°C aufgeheizt. Nach Erreichen der Endtemperatur von 180°C wurde die Reaktionslösung 20 Minuten bei dieser Temperatur gerührt. Nach Abkühlen der Reaktionslösung wurde der zurückgebliebene Feststoff von der Lösung getrennt, der Feststoff mit wenig ca. 80°C heißer Salpetersäure gewaschen und getrocknet. Das Filtrat, die Waschlösung und der getrocknete Rückstand wurden auf ihre Inhaltsstoffe mittels eines Röntgenfluoreszenzspektrometers (PW 1400 der Firma Philips) analysiert. Tabelle 1 zeigt die Analysen der Ausgangssubstanz und der in dem Versuch gewonnenen Endprodukte.

## BEISPIEL 2

Die Reaktionsparameter waren hier mit den in Beispiel 1 beschriebenen identisch. In diesem Versuch wurde der in dem Monazit enthaltenen Phosphatmenge die doppelt stöchiometrische Menge Eisen III in Form einer Eisen III-Verbindung zur Reaktionslösung zugegeben. Nach Ablauf der Reaktionszeit von 20 Minuten bei 180°C und Trennung der festen von der flüssigen Phase wurde der Feststoff mit salpetersaurer Lösung gewaschen, getrocknet und von Feststoff und den Lösungen erneut Analysen erstellt.

Tabelle 2 zeigt die Resultate.

TABELLE 1

| Element | Einsatz (g) | Filtrat (g) | Waschwasser (g) | Rückstand (g) | Ausbeute % berechnet über Lsg. |
|---|---|---|---|---|---|
| Σ SEE | 6,904 | 4,526 | 0,889 | 1,541 | 78.4 |
| U | 0,040 | 0,027 | 0,005 | 0,005 | 80,0 |
| Th | 1,110 | 0,566 | 0,170 | 0,403 | 66,3 |
| $Fe_2O_3$ *) | 1,130 | 0,140 | 0,072 | 4,930 | - |
| $P_2O_5$ | 4,780 | 0,117 | n.n. | 4,510 | 2,4 |

*) Es erfolgte eine $Fe_2O_3$-Zugabe von 4.016 g zur Reaktionslösung

TABELLE 2

| Element | Einsatz (g) | Filtrat (g) | Waschwasser (g) | Rückstand (g) | Ausbeute % |
|---|---|---|---|---|---|
| Σ SEE | 6,904 | 6,156 | 1,220 | 0,059 | ≈100 |
| U | 0,004 | 0,037 | 0,001 | <0,001 | >95,0 |
| Th | 1,110 | 0,819 | 0,300 | 0,008 | ≈100 |
| $Fe_2O_3$ *) | 1,130 | 0,770 | 0,386 | 8,820 | - |
| $P_2O_5$ | 4,780 | <0,010 | <0,010 | 4,650 | <0,5 |

*) Es erfolgte eine $Fe_2O_3$-Zugabe von 8,853 g zur Reaktionslösung

Ähnliche Ausbeuten (>96 %) an Seltenen Erden beim Druckaufschluß von Schwermineralphosphaten wurden erreicht, wenn anstelle der Eisen III-Verbindung Eisen II-Salze oder elementares Eisen (als Eisenspäne bzw. Schrott) oder Mischungen der Eisen II/III-Verbindungen bzw. Eisen II/III-Verbindungen mit metallischem Eisen zur Bindung der im Monazit enthaltenen Phosphatanteile eingesetzt wurden.

In weiteren Reihenuntersuchungen zur Ermittlung der für den Laugungsprozeß optimalen Eisenmenge wurden gefunden, daß ein $Fe_2O_3$ : $P_2O_5$ Molverhältnis von 1.6 : 1 die besten Resultate hinsichtlich SE-Ausbeute und die geringsten Gehalte an freiem Phosphat in der Laugelösung erbringt. Die zum Waschen der während der Laugung gebildeten Eisenphosphatverbindung verwendete salpetersaure Lösung kann als Verdünnungswasser der nächsten Charge zugeschlagen werden.

Das aus dem Laugeprozeß gewonnene salpetersaure Filtrat, das 96 % der im Monazit enthaltenen Seltenen Erden, des Urans und des Thoriums enthält, kann nun durch eine Flüssig/Flüssig-Extraktion mit für Uran und Thorium selektiv wirkenden Extraktionsmedien von diesen Elementen abgereinigt werden. Nach dem Stand der Technik wird gegenwärtig in fast allen Reinigungsanlagen dieser Art ein durch Kohlenwasserstoffe (wie z.B. Hexan oder Kerosin) verdünntes TBP (Tributylphosphat) eingesetzt.

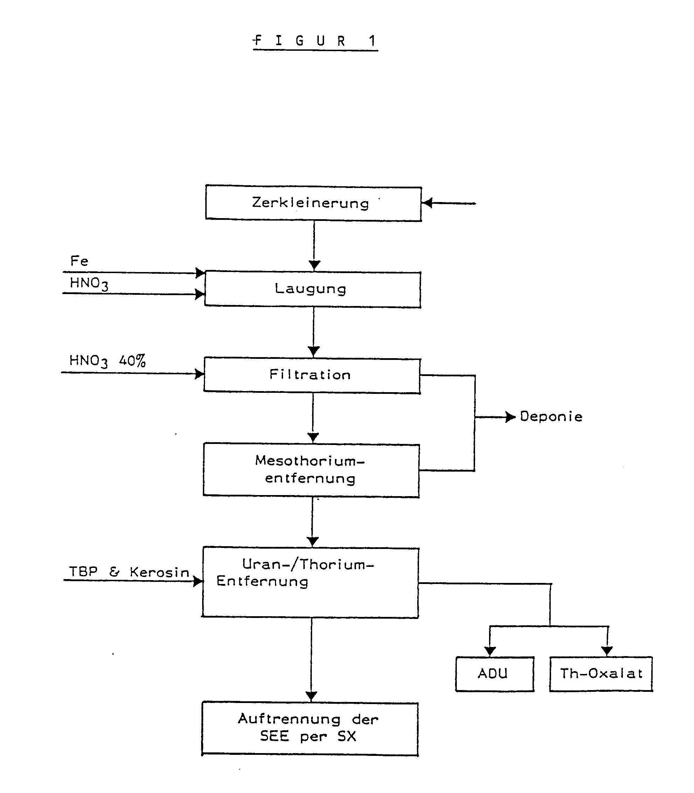

## Ansprüche

1. Verfahren zur Gewinnung von Seltenen Erden und gegebenenfalls Uran und Thorium aus entsprechenden Schwermineralphosphaten durch Aufschluß der zerkleinerten Schwermineralphosphate mittels Mineralsäuren unter erhöhtem Druck und erhöhter Temperatur, Abtrennung der anwesenden Feststoffe von der flüssigen Phase, gegebenenfalls Mesothoriumentfernung, Abtrennung von Uran und Thorium und gegebenenfalls Auftrennung der Seltenen Erden, dadurch gekennzeichnet, daß man vor dem Aufschluß der Schwermineralphosphate zu diesen das Salz, Oxid oder Metall eines Kations zusetzt, welches ein im Aufschlußmedium schwer lösliches Metallphosphat bildet.

2. Verfahren nach Anspruch 1, dadurch gekennzeichnet, daß als Schwermineralphosphat Monazit oder Xenotim verwendet wird.

3. Verfahren nach Anspruch 1 - 2, dadurch gekennzeichnet, daß als Mineralsäure Salpetersäure verwendet wird.

4. Verfahren nach Anspruch 1 - 3, dadurch gekennzeichnet, daß Salpetersäure von 10 bis 65 Gew.-%, vorzugsweise von 30 bis 45 Gew.-%, verwendet wird.

5. Verfahren nach Anspruch 1 - 4, dadurch gekennzeichnet, daß der Aufschluß bei Temperaturen von 110 bis 240°C, insbesondere von 150 bis 180°C, durchgeführt wird, wobei die Lösung vorzugsweise unter dem der jeweiligen Temperatur entsprechenden Eigendruck steht.

6. Verfahren nach Anspruch 1 - 5, dadurch gekennzeichnet, daß die Lösung unter zusätzlichen Partialdrücken anderer Gase, vorzugsweise Wasserstoff, Stickstoff und/oder Sauerstoff steht.

7. Verfahren nach Anspruch 1 - 6, dadurch gekennzeichnet, daß das Gewichtsverhältnis von Schwermineralphosphat zu Säure 1:0.5 bis 1:5, vorzugsweise 1:1 bis 1:3 beträgt.

8. Verfahren nach Anspruch 1 - 6, dadurch gekennzeichnet, daß der Aufschluß innerhalb von 0.1 bis 6 Stunden, vorzugsweise zwischen 0.25 und 1 Stunde durchgeführt wird.

9. Verfahren nach Anspruch 1 - 8, dadurch gekennzeichnet, daß als Salz des Kations oder diesem entsprechenden Oxid oder Metall Eisen, Mangan und/oder Magnesium zugesetzt wird.

10. Verfahren nach Anspruch 9, dadurch gekennzeichnet, daß als Salz des Kations ein im Aufschlußmedium lösliches Eisen-III-Salz verwendet wird.

11. Verfahren nach Anspruch 1 - 10, dadurch gekennzeichnet, daß das Salz des Kations bzw. das entsprechende Oxid oder Metall im stöchiometrischen Verhältnis oder im stöchiometrischen Überschuß zu dem im aufschließenden Material befindlichen Phosphatanteil zugesetzt wird.

12. Verfahren nach Anspruch 1 - 11, dadurch gekennzeichnet, daß ein Molverhältnis von $Fe_2O_3$ : $P_2O_5$ von 1.0 bis 20:1, vorzugsweise von 1.6 : 1 verwendet wird.

F I G U R  1

```
                        ┌──────────────────────┐
                        │   Zerkleinerung       │◄───────◄──
                        └──────────┬───────────┘
                                   │
                                   ▼
  Fe  ──────────────►   ┌──────────────────────┐
  HNO₃ ─────────────►   │     Laugung           │
                        └──────────┬───────────┘
                                   │
                                   ▼
  HNO₃ 40% ─────────►   ┌──────────────────────┐──────────┐
                        │     Filtration        │          │
                        └──────────┬───────────┘          │
                                   │                        ├──► Deponie
                                   ▼                        │
                        ┌──────────────────────┐          │
                        │   Mesothorium-        │──────────┘
                        │   entfernung          │
                        └──────────┬───────────┘
                                   │
                                   ▼
  TBP & Kerosin ────►   ┌──────────────────────┐──────────────┐
                        │   Uran-/Thorium-      │              │
                        │   Entfernung          │              │
                        └──────────┬───────────┘        ┌──────┴──────┐
                                   │                    ▼             ▼
                                   ▼                ┌───────┐   ┌──────────┐
                        ┌──────────────────────┐    │  ADU  │   │ Th-Oxalat│
                        │  Auftrennung der      │    └───────┘   └──────────┘
                        │  SEE per SX           │
                        └──────────────────────┘
```

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DD-A- 48 194 (J. ROST et al.) <br> * Anspruch * <br><br> --- | 1 | C 22 B 59/00 <br> C 22 B 60/02 <br> C 01 F 17/00 |
| A,D | US-A-2 783 125 (C. DE ROHDEN et al.) <br><br> --- | | |
| A | DE-B-1 078 555 (THORIUM) <br><br> ----- | | |

| | |
|---|---|
| | RECHERCHIERTE SACHGEBIETE (Int. Cl.4) |
| | C 22 B 59/00 <br> C 22 B 60/02 <br> C 01 F 17/00 |

Der vorliegende Recherchenbericht wurde für alle Patentansprüche erstellt.

| Recherchenort | Abschlußdatum der Recherche | Prüfer |
|---|---|---|
| BERLIN | 18-06-1987 | SUTOR W |